# DEMANDE DE BREVET EUROPEEN

(11) **EP 1 330 103 A1**
(43) Date de publication de la demande: **23.07.2003**
(21) Numéro de dépôt: 03290085.4
(22) Date de dépôt: 14.01.2003
(51) Int. Cl.: H04M 1/27, H04Q 7/22, H04M 1/56

(54) **Procédé d'envoi d'un message de type "SMS" et terminal de radiocommunication correspondant**

(30) Priorité: 21.01.2002 FR 0200695
(71) Demandeur: ALCATEL, 75008 Paris (FR)
(72) Inventeur: Le, Minh, 75017 Paris (FR); Lejay, Frédéric, 75011 Paris (FR)
(74) Mandataire: Sciaux, Edmond

(57) **Abrégé**

Procédé d'envoi d'un message notamment de type "SMS" comprenant un champ d'adresse, depuis un premier terminal de radiocommunication vers un autre terminal de radiocommunication destinataire, le champ d'adresse dudit message étant rempli par un numéro d'appel du terminal destinataire, caractérisé en ce que ledit numéro d'appel du terminal destinataire est sélectionné parmi des numéros d'appel mémorisés automatiquement dans le premier terminal, lesdits numéros mémorisés étant composés des numéros d'appel des terminaux derniers appelés et/ou derniers appelants.

## Description

L'invention concerne un procédé d'envoi d'un message de type "SMS" comportant un champ d'adresse, par l'utilisateur d'un terminal de radiocommunication, à un destinataire également équipé d'un terminal de radiocommunication.

Le domaine de l'invention est celui des radiocommunications avec les mobiles et concerne plus particulièrement le service des messages courts ("Short Message Service" ou "SMS" en anglais). On rappelle qu'un "SMS" est un message court sous forme textuelle, échangé entre deux personnes chacune étant équipée d'un terminal de radiocommunication tel qu'un téléphone portable. L'invention peut également s'étendre, notamment, aux messages dits avancés ("Enhanced Message Service" ou "EMS" en anglais) dont l'architecture est identique à celle des SMS et qui permettent l'envoie d'images, de mélodies ou de textes plus complets ou à des messages de type multimédia ("Multimedia Message Service" ou "MMS" en anglais).

Pour simplifier, on ne considérera par la suite que les "SMS" .

On rappelle qu'un "SMS", tout comme les autres architectures de messages mentionnées, comporte au moins un champ concernant l'adresse du destinataire du message et un champ concernant le texte du message.

Actuellement, lorsque l'utilisateur d'un terminal de radiocommunication souhaite envoyer un SMS, ce service d'envoi d'un SMS lui est proposé à travers un menu qui s'affiche sur l'écran d'affichage de son téléphone portable et qui se déroule par exemple de la manière suivante.

La page d'accueil du menu lui propose par exemple de choisir entre :
- accès au répertoire
- accès aux messages
- ...

Le choix par l'utilisateur de "accès aux messages" commande l'affichage suivant :
- consulter les messages
- créer un message
- ...

Le choix par l'utilisateur de "créer un message" commande l'affichage suivant :
- composer le texte
- envoyer à
- confirmation de l'envoi
- ...

Le choix par l'utilisateur de "envoyer à" commande l'affichage suivant :
- un seul destinataire
- plusieurs destinataires
- un destinataire du répertoire.

Or, l'utilisateur souhaite parfois envoyer un "SMS" pendant une communication vocale ; en particulier, il peut souhaiter en envoyer un à la personne avec laquelle il est en radiocommunication.

Actuellement, lorsque par exemple la personne appelée souhaite envoyer un "SMS" à son interlocuteur (la personne appelante), elle compose le texte du message et procède généralement de la manière suivante pour renseigner le champ adresse. Elle parcourt le répertoire de son téléphone portable ; si le numéro d'appel de son interlocuteur s'y trouve, elle l'importe dans le "SMS" en tant qu'adresse du "SMS", sinon elle demande à son interlocuteur son numéro d'appel et le saisit sur son téléphone portable pour le mémoriser en tant qu'adresse du "SMS".

Ces étapes sont fastidieuses et des erreurs de saisie peuvent apparaître lors de la saisie du numéro.

L'utilisateur procède de la même manière et en supporte donc les mêmes inconvénients lorsqu'il est par exemple en réunion et que, ne pouvant répondre à un appel, il souhaite envoyer un SMS à la personne qui vient d'essayer de le joindre.

Le document **US 2001/0028709** décrit un procédé permettant d'envoyer plus facilement un message SMS à la personne qui tente d'appeler et pour laquelle on ne peut ou veut prendre l'appel. L'utilisateur tape une commande sur son clavier pour choisir et envoyer un message SMS prédéterminé. Ce message est choisi parmi un jeu de plusieurs messages prédéterminés mémorisés dans le terminal. L'utilisateur n'a pas à chercher le numéro du destinataire. Le terminal identifie la personne qui tente d'appeler, à partir des informations d'identification du numéro de l'appelant, accompagnant le dernier appel reçu ; et il adresse le message SMS automatiquement à ce numéro.

Le but de la présente invention est de faciliter l'envoi de "SMS" notamment dans les cas où la personne destinataire n'est pas le dernier appelant, ou bien dans le cas où une communication est établie, sans avoir les inconvénients des procédures classiques : choix d'un numéro de destinataire de message SMS dans tout le répertoire, ou entrée manuelle d'un numéro.

L'invention a pour objet un procédé d'envoi d'un message notamment de type "SMS" comprenant un champ d'adresse, depuis un premier terminal de radiocommunication vers un autre terminal de radiocommunication destinataire, le champ d'adresse dudit "SMS" étant rempli par un numéro d'appel du terminal destinataire, **caractérisé** en ce que le premier terminal propose automatiquement à son utilisateur de choisir ledit numéro d'appel du terminal destinataire parmi une liste ordonnée de numéros d'appel mémorisés automatiquement dans le premier terminal, lesdits numéros mémorisés étant composés des numéros d'appel des terminaux derniers appelés et/ou derniers appelants ;
et en ce que la sélection du numéro d'appel du terminal destinataire parmi la liste ordonnée est réalisée par un utilisateur dudit premier terminal, par usage desdits moyens de commande.

Selon une application, le numéro d'appel du terminal destinataire proposé en première position dans la liste ordonnée est celui d'un terminal en cours de radiocommunication avec le premier terminal, lorsque ledit premier terminal est en cours de radiocommunication.

L'invention a également pour objet un terminal de radiocommunication comportant des moyens d'envoi d'un message notamment de type "SMS" comprenant un champ d'adresse, et comportant au moins une zone mémoire apte à stocker les numéros d'appel des terminaux de radiocommunication derniers appelants et/ou appelés, **caractérisé** en ce que lesdits moyens d'envoi d'un message de type "SMS" comportent :
- des moyens pour ordonner une liste de numéro d'appel du terminal destinataire parmi des numéros d'appel mémorisés automatiquement dans ladite zone mémoire,
- des moyens pour proposer à son utilisateur de choisir ledit numéro d'appel du terminal destinataire parmi ladite liste ordonnée,
- et des moyens de commande de la copie du numéro d'appel sélectionné de ladite zone mémoire dans ledit champ d'adresse.

Selon un caractéristique additionnelle, le terminal comporte des paramètres de configuration dont au moins un est dédié à ladite copie du numéro d'appel dans le champ d'adresse et des moyens de configuration dudit paramètre en vue de ladite copie.

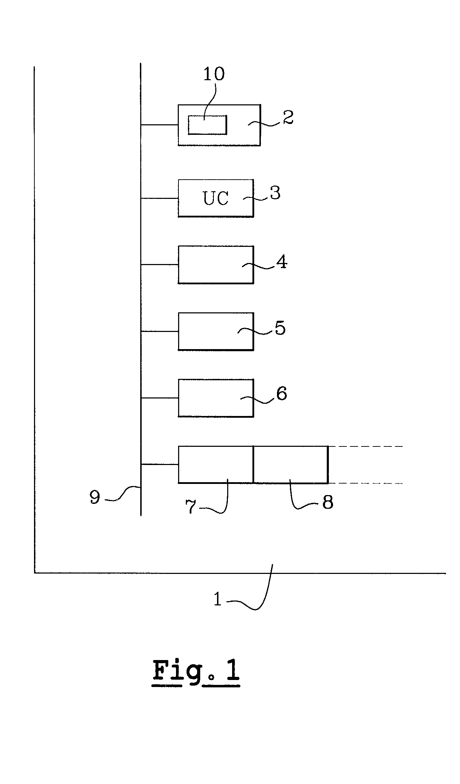

D'autres particularités et avantages de l'invention apparaîtront clairement à la lecture de la description faite à titre d'exemple non limitatif et en regard de la **figure 1** annexée qui représente schématiquement certains éléments d'un terminal de radiocommunication.

Le procédé selon l'invention consiste à permettre à l'utilisateur d'un terminal de radiocommunication d'envoyer facilement un message court de type "SMS" à un destinataire que l'utilisateur choisit parmi des numéros d'appel qui sont présentés à l'utilisateur sous la forme d'une courte liste ordonnée.

Il ne s'agit pas des numéros d'appel mémorisés dans le répertoire du terminal mais des numéros des derniers appelants et des derniers appelés, mémorisés par le terminal, ces numéros ayant été mémorisés automatiquement dans le terminal sans intervention de l'utilisateur. Ces numéros mémorisés par le terminal sont présentés à l'utilisateur sur l'écran de son terminal de radiocommunication, sous la forme d'une liste ordonnée de type "premier entré, premier sorti" ("Last In, First Out" en anglais). Autrement dit, le numéro le plus ancien disparaît de la liste quand un nouvel appel est émis ou reçu, pour faire de la place destinée au numéro correspondant au nouvel appel.

Lorsqu'une radiocommunication est en cours, le destinataire du SMS peut être celui avec lequel l'utilisateur est en radiocommunication, qu'il soit appelant ou appelé.

Lorsqu'aucune radiocommunication n'est pas établie, le destinataire du SMS peut être le dernier appelant (ou un des derniers appelants) auquel l'utilisateur n'a pu répondre (parce qu'il est, par exemple, en réunion) ; ou le dernier appelé (ou un des derniers appelés) qui n'a pas non plus répondu.

Parmi les différentes étapes à réaliser pour l'envoi du message SMS, l'une consiste à fournir l'adresse du destinataire du message, cette adresse étant composée du numéro d'appel du terminal de radiocommunication du destinataire. L'utilisateur ayant par ailleurs composé le texte du message, avant ou après avoir renseigné l'adresse, l'ensemble du message complété du texte et des informations nécessaires à l'envoi d'un SMS, peut être envoyé.

On considère ici plus particulièrement l'étape qui consiste à fournir le numéro d'appel du terminal de radiocommunication du destinataire puis le copier dans le champ d'adresse.

Selon l'invention, le choix du numéro d'appel du destinataire est effectué par l'utilisateur dans une liste ordonnée présentée par le terminal. De préférence, le numéro d'appel du terminal destinataire proposé en première position dans la liste ordonnée est :
- celui d'un terminal en cours de radiocommunication avec le premier terminal, lorsque ledit premier terminal est en cours de radiocommunication.
- celui du dernier appelant, lorsque ledit premier terminal n'est pas en cours de radiocommunication.

La copie du numéro d'appel ainsi choisi, dans le champ d'adresse du SMS, peut-être commandée par l'utilisateur, ou être systématiquement commandée, c'est-à-dire être commandée par défaut.

Lorsque aucun "SMS" n'est envoyé finalement, le numéro copié par défaut dans le champ d'adresse peut être écrasé par le prochain numéro d'appel. Cette commande par défaut est par exemple déterminée par un des paramètres de configuration du terminal de radiocommunication. L'utilisateur configure alors ce paramètre via un menu en vue de cette commande.

Selon un premier mode de réalisation, l'utilisateur fait le choix du numéro d'appel du terminal de radiocommunication du destinataire au moyen d'un menu qui apparaît lorsque la commande "envoyer à" est sélectionnée. Ce menu est par exemple :
- un seul destinataire
- plusieurs destinataires
- un destinataire du répertoire
- un des derniers appelants ou son nom ou son numéro d'appel
- un des derniers appelés ou son nom ou son numéro d'appel.

De préférence, ces deux dernières listes sont remplacées dans ce menu par une seule liste ordonnée, "un des derniers appelants ou appelés", rassemblant les derniers appelés et les derniers appelants. Cette liste comporte, de préférence, en tête :
- le numéro d'un terminal en cours de radiocommunication avec le premier terminal, si ledit premier terminal est en cours de radiocommunication ;
- celui du dernier appelant, si ledit premier terminal n'est pas en cours de radiocommunication. Elle continue, par exemple, avec les autres appelants dans l'ordre des dates décroissantes, puis elle mentionne le dernier appelé, et finit avec les autres appelés dans l'ordre des dates décroissantes.

Lorsque l'utilisateur choisit dans le menu l'option "un des derniers appelants ou appelés", la liste correspondante lui est présentée et il la parcourt pour sélectionner un numéro. Fréquemment, le numéro qu'il souhaite appeler est celui placé automatiquement en tête de liste, par conséquent le choix est très rapide. Si l'utilisateur souhaite en sélectionner un autre, il parcourt le reste de la liste, mais le choix reste beaucoup plus rapide qu'en parcourant tout l'annuaire du terminal, parce que la liste est courte.

Dans une variante de réalisation, la liste peut comporter en outre une les derniers numéros destinataires de messages SMS.

Deux cas se présentent selon que le numéro d'appel sélectionné est celui d'un appelant ou d'un appelé.

Lorsque le numéro d'appel sélectionné est celui du dernier appelé, ce numéro est déjà en mémoire parce que l'utilisateur l'a saisi directement ou indirectement en utilisant par exemple le répertoire. Il a été mémorisé par le terminal de radiocommunication dans une zone mémoire prédéterminée du terminal. Le choix par l'utilisateur d'un numéro dans la liste "un des derniers appelants ou appelés" commande alors, par défaut, la copie du numéro, de cette zone mémoire dans le champ d'adresse du SMS.

Lorsque le numéro d'appel sélectionné est celui du dernier appelant (ou l'un des derniers), il est également mémorisé par le terminal dans une zone mémoire prédéterminée. Le choix par l'utilisateur du "dernier appelant" (ou de l'un des derniers appelants) commande alors, par défaut, la copie du numéro, de cette zone mémoire dans le champ d'adresse du SMS.

Une fois le message complété, l'utilisateur peut alors l'envoyer au destinataire puisque le champ d'adresse est renseigné ; il l'envoie par exemple au moyen d'une commande "confirmation de l'envoi".

Dans certains cas, le numéro d'appel de l'appelant n'est pas mémorisé par le terminal de radiocommunication, parce qu'il n'est pas transmis pour des raisons de confidentialité ; et la copie du numéro dans le champ d'adresse est alors impossible. L'utilisateur n'a peut-être pas remarqué que le numéro de son interlocuteur ne lui était pas présenté. Un signal visuel et/ou sonore peut alors lui être envoyé indiquant que la copie du numéro dans le champ d'adresse est impossible.

Selon un mode de réalisation préférentiel, dès qu'une radiocommunication est initialisée, l'activation par l'utilisateur de la commande « envoyer à » fait apparaître directement une commande « envoi d'un SMS vers un des derniers appelants ou appelés » sans qu'il soit nécessaire de parcourir les différentes commandes d'un menu. L'utilisateur peut ainsi accéder à cette commande plus rapidement. Elle peut notamment être proposée sous forme d'icône.

Si l'utilisateur active cette commande, le terminal affiche alors la liste ordonnée décrite ci-dessus.

Il existe plusieurs modes de réalisation d'un terminal de radiocommunication. On en a représenté un exemple sur la figure 1 : ce terminal de radiocommunication 1 comprend notamment une unité centrale 3, une mémoire de programme 4, une mémoire de travail 5, une mémoire 6 de stockage, des moyens d'envoi d'un message de type SMS qui comprennent en particulier un champ d'adresse 7, un champ texte 8 et d'autres champs destinés aux autres informations spécifiques d'un SMS, et bien sûr un module 2 de type SIM. Ces éléments sont reliés entre eux par un bus 9.

Le module de type SIM comprend notamment une ou plusieurs mémoires 10 de stockage provisoire des derniers numéros appelés et/ou appelants. Ces derniers numéros appelés ou appelants peuvent éventuellement être aussi stockés dans la mémoire 6.

Le programme d'envoi de messages de type SMS, stocké dans la mémoire de travail 5 inclut des instructions de sélection d'un des numéros stockés dans la mémoire 6 et de copie du numéro sélectionné de la mémoire 6 vers le champ d'adresse 7, pour la mise en oeuvre du procédé selon l'invention.

Le terminal de radiocommunication selon l'invention peut également comporter des paramètres de configuration dont au moins un est dédié à la copie du numéro d'appel dans le champ d'adresse et des moyens de configuration dudit paramètre en vue de ladite copie.

## Revendications

1. Procédé d'envoi d'un message notamment de type "SMS" comprenant un champ d'adresse, depuis un premier terminal de radiocommunication vers un autre terminal de radiocommunication destinataire, le champ d'adresse dudit "SMS" étant rempli par un numéro d'appel du terminal destinataire, **caractérisé en ce que** le premier terminal propose automatiquement à son utilisateur de choisir ledit numéro d'appel du terminal destinataire parmi une liste ordonnée de numéros d'appel mémorisés automatiquement dans le premier terminal, lesdits numéros mémorisés étant composés des numéros d'appel des terminaux derniers appelés et/ou derniers appelants ;
et **en ce que** la sélection du numéro d'appel du terminal destinataire parmi la liste ordonnée est réalisée par un utilisateur dudit premier terminal, par usage desdits moyens de commande.

2. Procédé selon la revendication 1 **caractérisé en ce que** le numéro d'appel du terminal destinataire proposé en première position dans la liste ordonnée est celui d'un terminal en cours de radiocommunication avec le premier terminal, lorsque ledit premier terminal est en cours de radiocommunication.

3. Terminal de radiocommunication (1) comportant des moyens d'envoi d'un message de type "SMS" comprenant un champ d'adresse (7), et comportant au moins une zone mémoire (6 ou 10) apte à stocker les numéros d'appel des terminaux de radiocommunication derniers appelants et/ou appelés, **caractérisé en ce que** lesdits moyens d'envoi d'un message de type "SMS" comportent :
- des moyens pour ordonner une liste de numéros d'appel du terminal destinataire parmi des numéros d'appel mémorisés automatiquement dans ladite zone mémoire,
- des moyens pour proposer à son utilisateur de choisir ledit numéro d'appel du terminal destinataire parmi ladite liste ordonnée,
- et des moyens de commande de la copie du numéro d'appel sélectionné de ladite zone mémoire (6 ou 10) dans ledit champ d'adresse (7).

4. Terminal de radiocommunication selon la revendication 3, **caractérisé en ce qu'**il comporte des paramètres de configuration dont au moins un est dédié à ladite copie du numéro d'appel dans le champ d'adresse, et des moyens de configuration dudit paramètre en vue de ladite copie.
